# EUROPEAN PATENT SPECIFICATION

(11) **EP 1 550 112 B1**
(45) Date of publication and mention of the grant of the patent: **20.08.2008**
(21) Application number: 03793940.2
(22) Date of filing: 04.08.2003
(51) Int. Cl.: G11B 7/007

(54) **RECORDABLE OPTICAL RECORD CARRIER COMPRISING TWO SUB-GROOVES**
BESPIELBARER OPTISCHER AUFZEICHNUNGSTRÄGER MIT ZWEI SUB-RILLEN
SUPPORT D'ENREGISTREMENT OPTIQUE INSCRIPTIBLE COMPRENANT DEUX SILLONS SECONDAIRES

(30) Priority: 05.09.2002 EP 02078639
(43) Date of publication of application: 06.07.2005
(73) Proprietor: Koninklijke Philips Electronics N.V., 5621 BA Eindhoven (NL)
(72) Inventor: MEINDERS, Erwin, R., NL-5656 AA Eindhoven (NL); MARTENS, Hubert, C., F., NL-5656 AA Eindhoven (NL)
(74) Representative: van Liempd, Jan
(86) International application number: PCT/IB2003/003489
(87) International publication number: WO 2004/023462

(56) References cited:
- PATENT ABSTRACTS OF JAPAN vol. 015, no. 300 (P-1232), 30 July 1991 (1991-07-30) -& JP 03 104021 A (HITACHI LTD), 1 May 1991 (1991-05-01)

## Description

The present invention relates to a recordable optical record carrier comprising an information layer of a recording material for forming marks and lands representing an information, a substrate layer carrying said information layer and a cover layer covering said information layer, said substrate layer comprising a spirally evolving groove structure filled with recording material.

The total data capacity of optical discs is determined by the radial and tangential data density. The radial density is determined by the data track pitch, the tangential data capacity by the shortest mark that can be written. For rewritable phase-change discs, re-crystallization at the trailing edge of a mark during writing of the next mark is used to obtain a mark of shorter length than the optical spot size. Typically, half of the mark is erased to end up with a crescent shaped mark. For the recently introduced Blu-ray Disc (BD), a total data capacity of 25 Gbyte can be recorded on a single recording layer of a 12 cm disc. The shortest length is 150 nm (d=1 code) while the optical spot is 300 nm in width (1/e radius of the optical spot is 150 nm).

A recordable (write-once) BD format is required in addition to the RW (rewritable) format. This so-called BD-R system should also achieve the high data-capacity of a BD-RW system, i. e. 25 GB, to allow one-to-one copies. In recordable media mark formation occurs when a threshold temperature is exceeded. The mark-formation corresponds to an irreversible change in the information layer, and effects comparable to the re-crystallization in rewritable media in principle do not occur. Thus, the marks that have been recorded in recordable media essentially reflect the optical/thermal profile that was present during the recording process. To reduce the mark length, thus to increase the tangential density, less laser power may be used to write a smaller mark. As a consequence, the modulation, and thus signal-to-noise ratio, will drop as well.

This can be similarly discussed for write-once media based on phase-change material as recording material. The as-deposited amorphous material will re-crystallize to form circularly shaped crystalline marks. Mark length reduction due to post heat is not possible.

It is therefore an object of the present invention to provide a recordable optical record carrier by which data capacities can be achieved that are similar to the data capacities of corresponding rewritable optical record carriers.

This object is achieved according to the present invention by a recordable optical record carrier as claimed in claim 1 which is characterized in that the groove structure comprises a main groove divided into two neighboring sub-grooves separated by a barrier, wherein the two neighboring sub-grooves comprise the same depths.

The present invention is based on the idea to increase the data density in the tangential direction. While the main groove is required for tracking, the two neighboring sub-grooves influence the absorption of light of the recording laser beam since the absorption will mainly take place at the two sub-grooves. The localization of the absorption is forced by the shape of the sub-grooves and the limited amount of recording material above the barrier between the neighboring sub-grooves. Effectively, a bimodal temperature distribution will be achieved across the grooves that will cause the formation of two more or less separated marks in radial direction. These two marks form together a written mark. Thus, the modulation can be increased while the tangential density is not sacrificed, finally leading to an increase in the obtainable data density and thus data capacity.

Preferred embodiments of the invention are defined in the dependant claims. The barrier is preferably made of the substrate material which allows mastering of the groove structure by a simple process, such as electron-beam mastering, lithography patterning and subsequent etching. Also between neighboring groove structures a groove separation barrier is provided separating neighboring tracks from each other. Also that groove separating barrier is preferably made of substrate material.

According to another embodiment the height of the barrier between neighboring sub-grooves is smaller than or equal to the height of the substrate between two neighboring main grooves, i. e. of a groove separating barrier. The height of the barrier, and further also the shape of the barrier has an influence on the absorption of light by recording material present in the two sub-grooves, and thus influences the shape of the marks during recording.

As recording material an organic material, for instance a dye, or an anorganic material, for instance a phase-change material, can be used in general.

It is preferred that the written marks have essentially an oval or an essential ellipsoidal shape in the radial direction, i. e. being shorter in the tangential direction than in the radial direction so as to increase the tangential data density. To achieve marks having such a shape the shape of the main groove and the sub-grooves is adapted accordingly in a

### preferred embodiment.

The proposed mark shape modification is also beneficial for high-speed write-once recording. At high recording speeds, thermal in-track interference may hamper the mark formation process. To reduce the thermal in-track interference e.g. an ellipsoidal mark, such as obtained with the proposed modification, leads to less direct heating of the previously written marks.

A preferred groove shape is defined in claim 6 according to which the width of the sub-grooves in radial direction increases in the direction facing away from the substrate layer. Thus, a groove structure has essentially the shape of a "W", having for instance flank angles between 10 or 90°, preferably substantially 45°.

In addition to the substrate layer, the information layer and the cover layer, a dielectric layer an/or a metal layer can be provided between the information layer and the cover layer as additional separation layer. Further, the invention can also be applied in a multiple-stack optical record carrier, having more than one recording stack each comprising at least one information layer. An example of such a record carrier is the dual-layer Blu-ray Disc.

The invention will now be explained in more detail with reference to the drawings in which
Figs. 1a, 1b show long and short marks recorded in rewritable and recordable record carriers,
Fig. 2 shows a cross section of an optical record carrier according to the present invention,
Figs. 3a, 3b show the mark shape on a known record carrier and a record carrier according to the invention,
Fig. 4 shows a cross section of another embodiment of an optical record carrier according to the present invention,
Fig. 5 shows the temperature distribution in an optical record carrier according to the present invention in a top view,
Fig. 6 shows the temperature distribution in an optical record carrier according to the present invention in a cross-sectional view, and
Fig. 7 shows a cross section of still another embodiment of an optical record carrier according to the present invention.

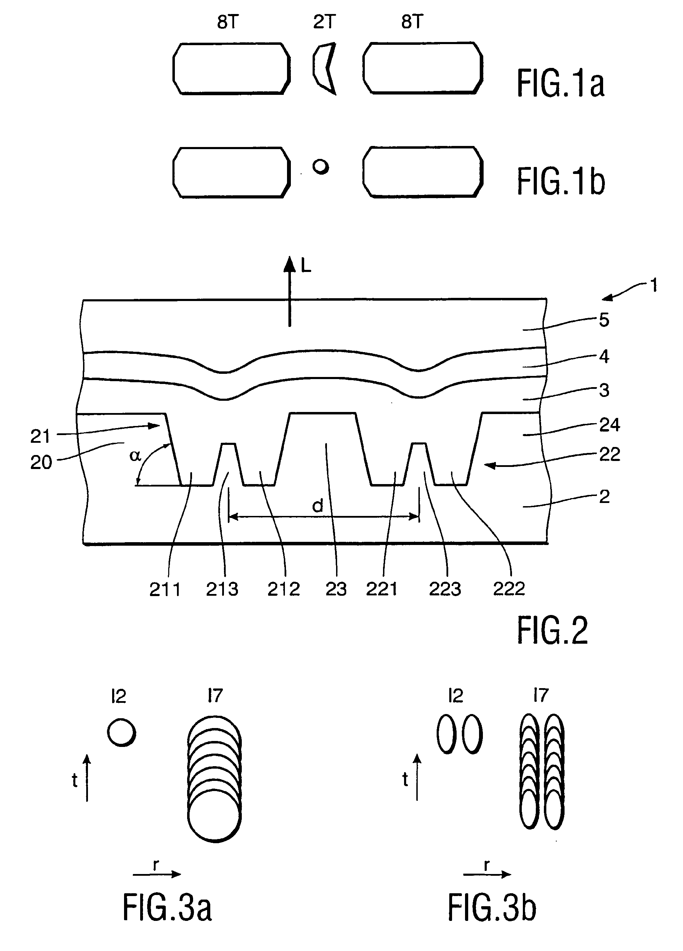

To achieve data capacities in write-once systems that are similar to the data capacities of corresponding rewritable systems, very narrow marks need to be written at short runlengths, while in rewritable media the short marks are as broad as the long marks. This illustrated in Fig. 1 showing a schematic drawing of long (8T) and short (2T) marks recorded in rewritable (RW) media (fig. 1a) and recordable (R) media (fig. 1b) at high density. It shall be noted that the shortest marks are comparable or smaller than the optical spot profile. The consequence is that during read-out, the optical modulation of the shortest marks in recordable media vanishes.

This problem can also be illustrated as well by comparing the resolution (=2Tₚₚ/8Tₚₚ) of the 2T marks for BD-RW and BD-R at a density of 23 GB. According to the BD-RW specification, the 2T resolution should be larger than 10 %, and this is met in practice. However, so far even in the best BD-R media the resolution at 23 GB is at most 5 %. This poor resolution significantly deteriorates the jitter. The current invention provides a solution to write small but broad marks, i. e. having a high tangential density, such that a high modulation is preserved.

Fig. 2 shows a cross section of a recordable optical record carrier, such as BD-R, according to the present invention. That record carrier 1 comprises a substrate layer 2, in particular made of a polycarbonate material, an information layer 3, in particular made of a dye or phase-change material, a metal layer 4, in particular made of silver, and a cover layer 5, in particular made of a plastic material.

The substrate layer 2 has a groove structure having several spirally evolving main grooves of which two neighboring main grooves 21, 22 are shown which are separated by a groove separating barrier 23 and adjacent barriers 20, 24 separating the two main grooves 21,22 from neighboring main grooves (not shown). These main grooves 21, 22 are required for tracking during read-out or recording. The intermediate groove separating barrier 23 and the barriers 20, 24 serve as physical barrier.

Each of said main grooves 21, 22 is further divided into two neighboring sub-grooves 211, 212 or 221, 222, respectively, which are separated from each other by barriers 213 or 223, respectively. The distance d between those barriers 213, 223 determines the track pitch. This data track pitch is for example 1.6 µm for CD-R, 750 nm for DVD+R and 320 nm for BD-R. The sub-grooves 211, 212 and 221, 222 widen in the direction to the information layer and show a flank angle α of about 75°.

The main grooves 21, 22, and thus also the sub-grooves 211, 212 and 221, 222 are filled with recording material of the information layer 3. Due to the physical barrier 23 absorption of light of the recording laser beam will mainly take place at the two sub-grooves of the main groove 21, 22 in which marks shall be formed. The physical barrier 23 thus avoids absorption of laser light L, having an optical spot size in the order of magnitude of the track pitch (for BD-R), and thus heating an decomposition of the recording material. The localization of the absorption is forced by the shape of the sub-grooves and the limited amount of recording material above the intermediate barrier 213, 223. Effectively, a bimodal temperature distribution will remain across the track on which information shall be recorded that will cause the formation of two more or less separated marks/pits. These two marks form together the written marks. Due to the shape of the sub-grooves the written mark has now essentially an oval or ellipsoidal shape which means that the modulation is increased while the tangential density is not sacrificed.

Typical mark/pit shapes that result from double-grooved discs according to the present invention are compared with conventional mark shapes in Fig. 3. Fig. 3a shows the mark shape achieved on a known single-groove write-once disc, while Fig. 3b shows the mark shape achieved on a double-grooved disc according to the present invention, both for a short (I2) and a long (17) runlength. As can be seen in Fig. 3b two sub-marks are obtained due to the two sub-grooves which together form the written mark having an oval shape in the radial direction r. Thus, the mark is shorter in the tangential direction t compared to the radial direction r to increase the tangential data density and to preserve a high modulation.

A preferred embodiment of a recordable disc for DVD according to the present invention shows a data track pitch of 740 nm, a groove depth of 150 nm, a sub-groove width of 100 nm, a barrier height of the barriers separating the sub-grooves of 120 nm and flank angles of 30°. The metal layer thickness is chosen as 100 nm and the information layer thickness at land is chosen as 30 nm. For a BD-R disc exemplary parameters are: data track pitch 320 nm, groove depth 100 nm, sub-groove width 50 nm and flank angle 45°.

Manufacturing of such a groove structure can be done with electron beam mastering and lithography patterning and subsequent etching. With lithography, first shallow grooves are etched, representing the intermediate barriers that divide the main groove into two parts, in the substrate layer. A second photo-resist layer is applied, covering both the shallow grooves and untouched material, and deeper grooves are etched, representing the main lands determining the data track pitch of the disc. In this way, a two-level father structure can be created and used for replication of the double-grooved substrates.

If the physical barrier separating the two sub-grooves is of the same height as the adjacent lands, then the mastering process can be identical to that of Blu-ray disc mastering, except the smaller spot size that is possibly required. If the physical barrier is lower than the adjacent lands, then the mastering process should be performed with variable light intensity, such that the replication layer is partly removed from the substrate upon curing.

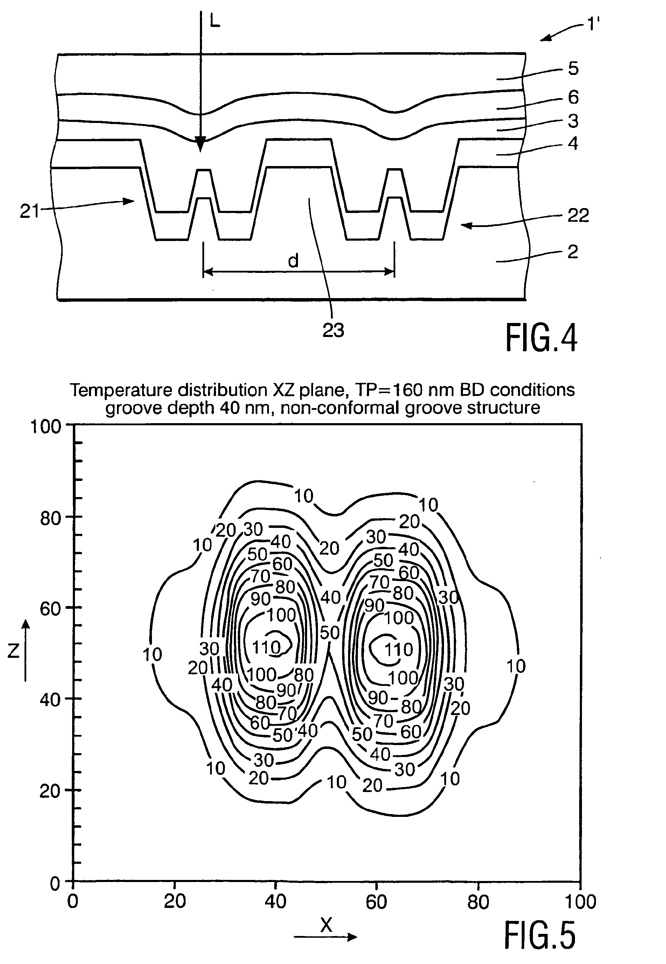

Fig. 4 shows another embodiment of a record carrier 1 according to the present invention where a reversed stack layout is used, meant for BD conditions. Therein the metal layer 4 is first deposited on the double-grooved substrate 2, then the dye layer 3 is deposited and possibly covered with an optional dielectric layer 6 which is optional and the cover layer 5. The track pitch d in this embodiment is preferably 160 nm. As can be seen, the metal layer 4 also shows the double-groove structure of the substrate layer 2.

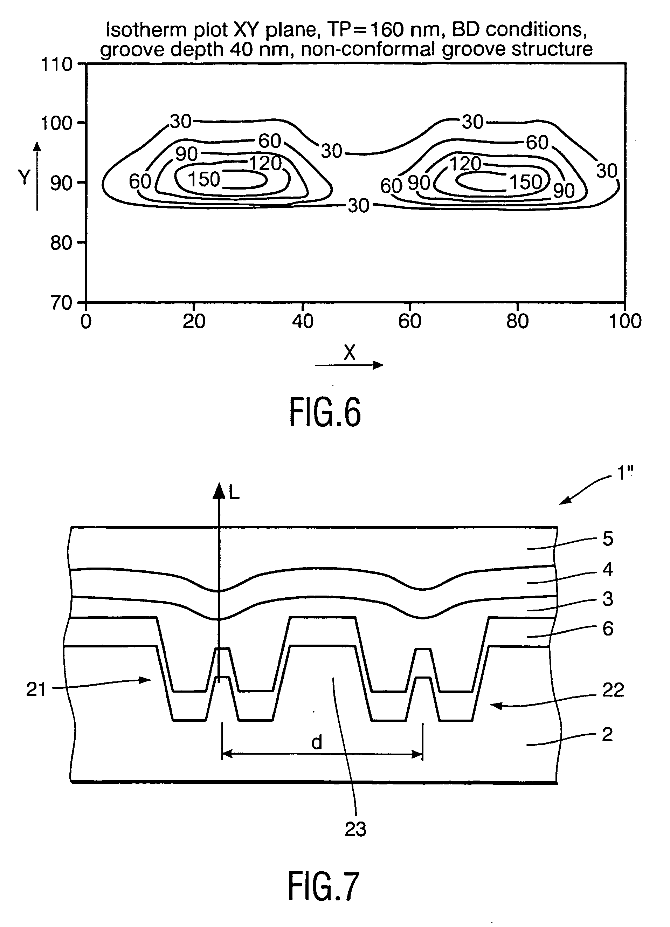

Figs. 5 and 6 show an example calculation of the temperature distribution in a double grooved disc according to the present invention, as for instance shown in Fig. 2. Fig. 5 shows a top view and Fig. 6 shows a cross-sectional view. The double groove clearly results in two separated hot spots, together forming an ovally shaped temperature distribution.

Fig. 7 shows still another embodiment of a record carrier 1" according to the present invention which is quite similar to the embodiment shown in Fig. 2 and which is meant for DVD conditions. Therein the layer stack comprises an additional dielectric layer 6 between the information layer 3 and the substrate layer 2. Said dielectric layer 6 also shows the double-groove structure of the substrate layer 2.

According to the present invention a double-grooved recordable optical record carrier is proposed by which the data density in tangential direction can be increased thus leading to an increase of the obtainable data capacity.

## Claims

1. A recordable optical record carrier comprising an information layer (3) of a recording material for forming marks and lands representing an information, a substrate layer (2) carrying said information layer (3) and a cover layer (5) covering said information layer (3), said substrate layer (2) comprising a spirally evolving groove structure filled with a recording material, **characterized in that** said groove structure comprises a main groove (21; 22) divided into two neighboring sub-grooves (211, 212; 221, 222) separated by a barrier (213; 223), wherein the two neighboring sub-grooves (211, 212; 221, 222) comprise the same depths.

2. A recordable optical record carrier as claimed in claim 1, wherein said barrier (213; 223) is made of substrate material.

3. A recordable optical record carrier as claimed in claim 1, wherein the height of said barrier (213; 223) is equal to or smaller than the height of the substrate (23) between two neighboring main grooves (21; 22).

4. A recordable optical record carrier as claimed in claim 1, wherein the recording material is an organic material, in particular a dye, or an anorganic material, in particular a phase-change material.

5. A recordable optical record carrier as claimed in claim 1, wherein the shape of the main groove (21; 22) and the sub-grooves (211, 212; 221, 222) is adapted so as to obtain marks having an essentially oval shape in radial direction (r).

6. A recordable optical record carrier as claimed in claim 1, wherein the width of the sub-grooves (211, 212; 221, 222) in radial direction (r) increases in the direction facing away from said substrate layer (2), in particular having flank angles (α) in an angle range of 10 to 90°.

7. A recordable optical record carrier as claimed in claim 1, further comprising a metal and/or a dielectric layer (4) between said information layer (3) and said cover layer (5).

## Patentansprüche

1. Beschreibbarer optischer Aufzeichnungsträger mit einer Informationsschicht (3) aus einem Aufzeichnungsmaterial zum Bilden von Marken und Lands, die eine Information repräsentieren, wobei eine Substratschicht (2) die genannte Informationsschicht (3) trägt und eine Deckschicht (5) die genannte Informationsschicht (3) bedeckt, wobei die Substratschicht (3) eine sich spiralförmig entwickelnde Rillenstruktur umfasst, die mit Aufzeichnungsmaterial gefüllt ist, **dadurch gekennzeichnet, dass** die genannte Rillenstruktur eine Hauptrille (21; 22) umfasst, die in zwei durch eine Barriere (213; 223) getrennte benachbarte Teilrillen (211, 212; 221, 222) unterteilt ist, wobei die zwei benachbarten Teilrillen (211, 212; 221, 222) die gleiche Tiefe aufweisen.

2. Beschreibbarer optischer Aufzeichnungsträger nach Anspruch 1, bei dem die genannte Barriere (213; 223) aus Substratmaterial hergestellt ist.

3. Beschreibbarer optischer Aufzeichnungsträger nach Anspruch 1, bei dem die Höhe der Barriere (213; 223) gleich oder kleiner als die Höhe des Substrats (23) zwischen zwei benachbarten Hauptrillen (21; 22) ist.

4. Beschreibbarer optischer Aufzeichnungsträger nach Anspruch 1, bei dem das Aufzeichnungsmaterial ein organisches Material ist, insbesondere ein Farbstoff, oder ein anorganisches Material, insbesondere ein Phasen änderndes Material.

5. Beschreibbarer optischer Aufzeichnungsträger nach Anspruch 1, bei dem die Form der Hauptrille (21; 22) und der Teilrillen (211, 212; 221, 222) so angepasst ist, dass Marken mit einer im Wesentlichen ovalen Form in radialer Richtung (r) erhalten werden.

6. Beschreibbarer optischer Aufzeichnungsträger nach Anspruch 1, bei dem die Breite der Teilrillen (211, 212; 221, 222) in radialer Richtung (r) von der genannten Substratschicht (2) weg zunimmt, insbesondere mit Flankenwinkeln (α) in einem Winkelbereich von 10 bis 90°.

7. Beschreibbarer optischer Aufzeichnungsträger nach Anspruch 1, ferner mit einer Metall- und/oder einer dielektrischen Schicht (4) zwischen der genannten Informationsschicht (3) und der genannten Deckschicht (5).

## Revendications

1. Support d'enregistrement optique enregistrable comprenant une couche d'information (3) constitué d'un matériau d'enregistrement pour former des marques et des parties intermédiaires représentant une information, une couche de substrat (2) portant ladite couche d'information (3) et une couche de couverture (5) couvrant ladite couche d'information (3), ladite couche de substrat (2) comprenant une structure de sillons se développant en spirale qui est remplie d'un matériau d'enregistrement, **caractérisé en ce que** ladite structure de sillons comprend un sillon principal (21; 22) qui est divisé en deux sous-sillons voisins (211, 212; 221, 222) étant séparés par une barrière (213; 223) dans laquelle les deux sous-sillons voisins (211, 212; 221, 222) comprennent les mêmes profondeurs.

2. Support d'enregistrement optique enregistrable selon la revendication 1, dans lequel ladite barrière (213; 223) est fabriquée à partir d'un matériau de substrat.

3. Support d'enregistrement optique enregistrable selon la revendication 1, dans lequel la hauteur de ladite barrière (213; 223) est égale ou inférieure à la hauteur du substrat (23) entre deux sillons principaux voisins (21; 22).

4. Support d'enregistrement optique enregistrable selon la revendication 1, dans lequel le matériau d'enregistrement est un matériau organique, en particulier une teinture, ou un matériau inorganique, en particulier un matériau de changement de phase.

5. Support d'enregistrement optique enregistrable selon la revendication 1, dans lequel la forme du sillon principal (21; 22) et des sous-sillons (211, 212; 221, 222) est adaptée de manière à obtenir des marques ayant une forme essentiellement ovale dans le sens radial (r).

6. Support d'enregistrement optique enregistrable selon la revendication 1, dans lequel la largeur des sous-sillons (211, 212; 221, 222) dans le sens radial (r) s'accroît dans le sens s'éloignant de ladite couche de substrat (2), en particulier ayant des angles de flanc (α) dans une gamme d'angles comprise entre 10° et 90°.

7. Support d'enregistrement optique enregistrable selon la revendication 1, comprenant encore un métal et/ou une couche diélectrique (4) entre ladite couche d'information (3) et ladite couche de couverture (5).
